# EUROPEAN PATENT SPECIFICATION

(11) **EP 3 757 428 B1**
(45) Date of publication and mention of the grant of the patent: **13.03.2024**
(21) Application number: 20182454.7
(22) Date of filing: 26.06.2020
(51) Int. Cl.: F16H 47/04

(54) **TRANSMISSION ARCHITECTURE FOR AGRICULTURAL WORK VEHICLES**
GETRIEBEARCHITEKTUR FÜR LANDWIRTSCHAFTLICHE ARBEITSFAHRZEUGE
ARCHITECTURE DE TRANSMISSION POUR VÉHICULES DE TRAVAIL AGRICOLES

(30) Priority: 27.06.2019 IT 201900010278
(43) Date of publication of application: 30.12.2020
(73) Proprietor: CNH Industrial Italia S.p.A., 10156 Torino (IT)
(72) Inventor: Morandi, Gabriele, 41125 Modena (IT); Tonini, Emanuele, 41030 Bastiglia (MO) (IT)
(74) Representative: CNH Industrial IP Department

(56) References cited:
- US-A- 4 291 592
- US-A1- 2007 142 168
- US-A1- 2008 085 801

## Description

### TECHNICAL FIELD

The present invention concerns a transmission for a work vehicle, in particular a transmission architecture for heavy work vehicles, more in particular off-road vehicles such as agricultural tractors.

### BACKGROUND OF THE INVENTION

Besides the need for kinetic energy, heavy work vehicles like tractors often need linear movement for actuators, such as, buckets, HPL, which are usually operated with hydraulic cylinders or powered to deliver torque at their Power Take Off (PTO) to drive implements or to deliver hydraulic power to drive actuation on implements. The movements and payloads of hydraulic actuators and PTOs cause another load for the combustion engine, and may demand high peak powers.

Traditionally, tractors have been built with a mechanical and a hydraulic powertrain. One important performance evaluation of such powertrains is the capability to maintain a "Power Zero" condition, that is having locked wheels. This condition - a null transmission ratio with gear engagement - can be controlled by a hydrostatic unit. Power Zero condition can be achieved either in 1st Forward Gear or in 1st Reverse Gear.

In order to achieve Power Zero condition, a vehicle controller or an engine electronic control unit has to control the hydrostatic unit to a precise ratio (which depends on Forward gear - Reverse gear ratios) acting on an electrovalve with a current control.

The current necessary to achieve Power Zero condition is influenced by many factors: valve characteristic, valve hysteresis, oil temperature, wheel load, and so on. Moreover, Power Zero quality is also affected by fast variations of driveline input speed. For these reasons, even when in Power Zero condition, a slight movement of the wheels may happen and this means a low quality Power Zero condition.

Known powertrains for work vehicle also suffer a remarkable delay when changing direction in Power Zero condition. In fact, a typical condition for work vehicles consists in a vehicle stop followed by a pause and finally an acceleration in the opposite direction. When the operator acts on the drive command, driveline control commands a clutch swap and allow a vehicle movement only after the end of this clutch swap.

US2007142168A discloses a method for increasing a temperature of oil in a continuously variable transmission during engine start-up, the transmission including a fluid pump and motor, and a mechanical transmission. The method includes starting the engine, maintaining the fluid pump at substantially zero displacement, and heating the transmission oil by relative rotation of a first clutch disc and first clutch hub of a first clutch assembly and by relative rotation of a second clutch disc and second clutch hub of a second clutch assembly. The method further includes maintaining a substantially zero net torque from the transmission during the heating of the oil by the first and second clutch assemblies.

Therefore, the need is felt to provide a transmission architecture for tractors, which is capable of fulfilling in a more reliable way the "Power Zero" condition and performing a direction change without remarkable delay.

Aim of the present invention is to satisfy the above mentioned needs.

### SUMMARY OF THE INVENTION

The aforementioned aim is reached by a transmission as claimed in the appended set of claims.

By means of this invention a high quality Power Zero can be achieved.

Another aim of this invention is to improve the transmission reactivity after a change of the selected direction executed in Power Zero condition.

### BRIEF DESCRIPTION OF DRAWINGS

For a better understanding of the present invention, preferred embodiments are described in the following, by way of non-limiting examples, with reference to the attached drawing wherein the only figure is a schematic representation of a transmission according to a preferred embodiment of the present invention.

### DETAILED DESCRIPTION OF THE INVENTION

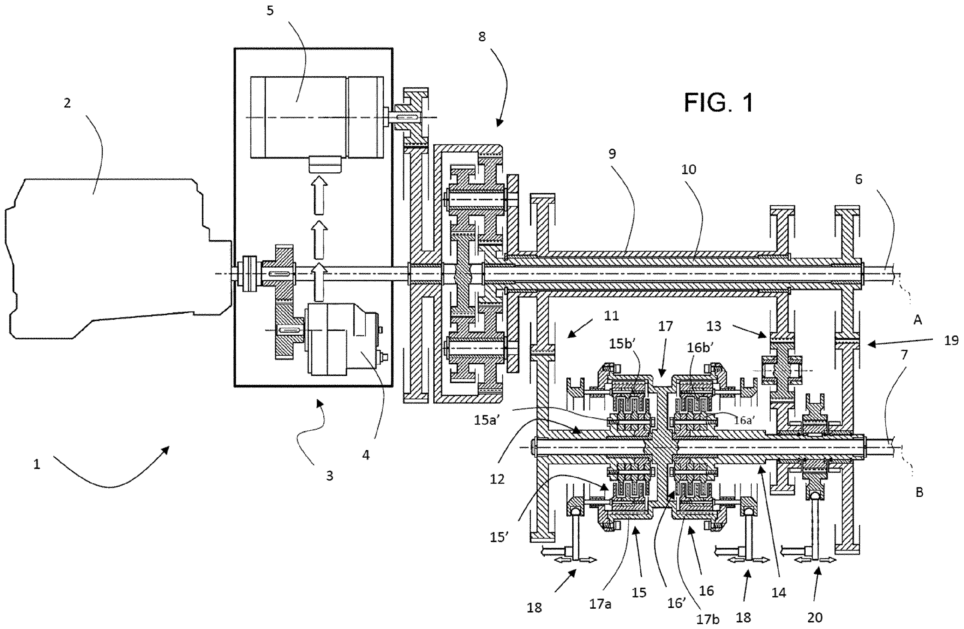

Figure 1 discloses a transmission 1 for a work vehicle such as an agricultural tractor provided with an engine 2, advantageously a diesel engine or an alternative fuel (for example liquefied natural gas) engine.

Engine 2 is configured to provide a torque to a hydrostatic unit 3 and to a PTO shaft 6 to drive implements of the work vehicle. The hydrostatic unit 3 is configured to convert the received mechanical energy by engine 2 into hydraulic pressure and, again, into mechanical energy to drive an output shaft 7 mechanically connected to the traction wheels of the vehicle. Accordingly, hydrostatic unit 3 advantageously comprises a pump 4 and a hydraulic motor 5.

Transmission 1 further comprises a planetary gear train 8 configured to transmit a torque from the hydrostatic unit 3 to a first input shaft 9 and, preferably, also to a second input shaft 10. Advantageously, PTO shaft 6, first and second input shafts 9, 10 are all coaxial to an axis A of transmission 1 and, more preferably, first input shaft 9 is carried in rotatably free manner on PTO shaft 6 and second input shaft 10 is carried in rotatably free manner on first input shaft 9.

First input shaft 9 is coupled, to an end proximal to the planetary gear train 8, to a first gearing 11, which connects input shaft 9 to a first intermediate shaft 12, wherein first gearing 11 is configured so that the rotation direction of first intermediate shaft 12 is opposite with respect to the rotation direction of input shaft 9.

First input shaft 9 is also coupled, to an opposite end with respect to the coupling with first gearing 11, to a second gearing 13, which is mounted concentric to a second intermediate shaft 14 and free to rotate in respect to the shaft itself. Under certain condition described in the following, second gearing 13 may connect first input shaft 9 to second intermediate shaft 14, wherein second gearing 13 is configured so that the rotation direction of the second intermediate shaft 14 is the same with respect to the rotation direction of input shaft 9. First and second gearings 11, 13 have the same gear ratio so that the values of the transmitted torque are equal.

Second input shaft 10 is coupled, to a distal end with respect to the planetary gear train 8, to a third gearing 19. Third gearing 19 is mounted concentric to second intermediate shaft 14 and free to rotate in respect to the shaft itself. Under certain condition described in the following, third gearing 19, may connect the second input shaft 10 to the second intermediate shaft 14, wherein third gearing 19 is configured so that the rotation direction of the second intermediate shaft 14 is opposite with respect to the rotation direction of input shaft 10.

Advantageously, third gearing 19 has a different gear ratio in respect to first and second gearings 11, 12.

Second intermediate shaft 14 is slidably connected to a synchronizer element 20, which may be moved from a neutral position to engage either second gearing 13 or third gearing 19. In such a way, synchronizer element 20 can realize the coupling of the second gearing 13 with the second intermediate shaft 14 or the coupling of the third gearing 19 with the second intermediate shaft 14.

Output shaft 7, first and second intermediate shafts 12, 14 are all coaxial to an axis B of transmission 1 and, preferably, both first and second intermediate shafts 12, 14 are carried in rotatably free manner on output shaft 7.

First and second intermediate shafts 12, 14 are configured to cooperate respectively with first and second engaging means 15, 16. First engaging means is configured to couple first intermediate shaft 12 with a rotating housing 17, while second engaging means 16 is configured to couple second intermediate shaft 14 with the rotating housing 17 as well.

First and second engaging means 15, 16 may each comprise respective disk clutches 15', 16', preferably multiple disks clutches, actuated by respective driving device 18. Driving devices 18 may be of any typology, e.g. mechanic, electric or pneumatic.

In particular, clutch 15' may comprise a fixed portion 15a' which is fixedly carried by first intermediate shaft 12 and a mobile portion 15b' which is connected to driving device 18 and slidably cooperating with first portion 17a of rotating housing 17. In particular mobile portion 15b' may cooperate with an inner gearing realized in first portion 17a, such gearing allowing a translational movement of mobile portion 15b' along axis B while allowing a rotational coupling of rotating housing 17 with mobile portion 15b'.

Clutch 16' may comprise a fixed portion 16a' which is fixedly carried by second intermediate shaft 14 and a mobile portion 16b' which is connected to driving device 18 and slidably cooperating with second portion 17b of rotating housing 17. In particular mobile portion 16b' may cooperate with an inner gearing realized in second portion 17b, such gearing allowing a translational movement of mobile portion 16b' along axis B while allowing a rotational coupling of rotating housing 17 with mobile portion 16b'.

Rotating housing 17 is fixedly connected or realized in a single body with the output shaft 7.

Therefore, by engaging synchronizer element 20 with second gearing 13 or third gearing 19 and by actuating engaging means 15 or engaging means 16, three different gear ratios between input shaft 9, 10 and output shaft 7 may be realized. By means of this simple transmission architecture, the Power Zero condition may also be realized in a very reliable way. All these operation conditions will be described hereinafter.

Transmission 1 may further comprise an electronic unit, not shown, configured to control the transmission operation. Advantageously, electronic control unit is further electrically connected to driving devices 18 and to synchronizer element 20 to control their operating status. Further, electronic unit may be connected to engine 2 and to hydrostatic unit 3 to control their operation. Preferably such electronic unit may be the ECU (Electronic Control Unit) of the tractor.

Thereinafter, the operation of transmission 1 according to the above description will be described in several following ways, indicated as the typical working conditions of the tractor.

First it is noted that the hydrostatic unit 3, in all possible operating modes described in what follows, is always carried by the internal combustion engine 2. Furthermore, engine 2 is configured to provide mechanical energy to the PTO shaft 6 to drive implements and, via hydrostatic unit 3, to the output shaft 7 mechanically connected to the traction wheels.

In a first operation mode, first disk clutch 15' is engaged by driving element 18, second disk clutch 16' is not engaged and synchronizer element 20 is in its neutral position. Hydrostatic unit 3 transmits torque to first and second input shaft 9, 10. First input shaft 9 is connected to first gearing 11 and first intermediate shaft 12. By the engagement of first disk clutch 15', torque is transmitted to rotating housing 17 and to the output shaft 7, so that a first gear ratio is realized between first input shaft 9 and output shaft 7. In particular, with this shifting maneuver, the operator of the work machine may obtain a 1^{st} Forward Gear.

In a second operation mode, first disk clutch 15' is not engaged, second disk clutch 16' is engaged by driving element 18 and synchronizer element 20 is engaged with third gearing 19. Hydrostatic unit 3 transmits torque to first and second input shaft 9, 10. Second input shaft 10 is connected to third gearing 19. By the engagement of the synchronizer element 20, third gearing 19 is connected to second intermediate shaft 14. Furthermore, by the engagement of second disk clutch 16', torque is transmitted to rotating housing 17 and to the output shaft 7, so that a second gear ratio is realized between second input shaft 10 and output shaft 7. In particular, with this shifting maneuver, the operator of the work machine may obtain a 2^{nd} Forward Gear.

In a third operation mode, first disk clutch 15' is not engaged, second disk clutch 16' is engaged by driving element 18 and synchronizer element 20 is engaged with second gearing 13. Hydrostatic unit 3 transmits torque to first and second input shaft 9, 10. First input shaft 9 is connected to second gearing 13. By the engagement of the synchronizer element 20, second gearing 13 is connected to second intermediate shaft 14. Furthermore, by the engagement of second disk clutch 16', torque is transmitted to rotating housing 17 and to the output shaft 7, so that a third gear ratio is realized between first input shaft 9 and output shaft 7. Since second gearing 13 is configured to transmit torque in an opposite rotation direction with respect to both first and third gearing 11, 19, with this shifting maneuver, the operator of the work machine may obtain a 1^{st} Reverse Gear.

According to the present invention, in a fourth operation mode an innovative Power Zero condition may be realized. In such an operation mode, the electronic unit controls the hydrostatic unit 3 so that the hydrostatic unit itself is in a condition very close to the Power Zero ratio. Under this condition, both first disk clutch 15' and second disk clutch 16' may be engaged by driving elements 18 while synchronizer element 20 is engaged with second gearing 13. Hydrostatic unit 3 transmits a very low torque to first and second input shaft 9, 10. First input shaft 9 is connected to both first and second gearing 11, 13. By the engagement of the synchronizer element 20, second gearing 13 is connected to second intermediate shaft 14. Furthermore, by the engagement of both first and second disk clutch 15' 16', a first "near zero" torque is transmitted to rotating housing 17 and to output shaft 7 by first intermediate shaft 12 in a "Forward" direction. At the same time, a second "near zero" torque (whose value is equal to the first "near zero" torque value) is transmitted to rotating housing 17 and to output shaft 7 by second intermediate shaft 14 in a "Reverse" direction, so that as a result the torque acting on output shaft 7 is exactly equal to zero. Said in a different wording, a "mechanical short circuit" is created on output shaft 7, so that every torque variation in one rotation direction always results compensated by the same torque variation in the opposite rotation direction. By this shifting maneuver, the operator of the work machine may obtain a Power Zero condition. This condition may be called Double Clutch Power Zero (DCPZ), since both disk clutches 15' and 16' are engaged.

Accordingly, the invention pertains to a method for operating a transmission 1 as described above, such method comprising the following steps:
- controlling the hydrostatic unit 3 by an electronic unit controls, so that the hydrostatic unit provides to the input shaft 9 a torque value very close to a Power Zero ratio,
- transmitting by the first gearing 11 to the first intermediate shaft 12 a first "near zero" torque value,
- transmitting by the second gearing 13 to the second intermediate shaft 14, a second "near zero" torque value having opposite rotation direction and same value as the first "near zero" torque,
- contemporary engaging by driving devices 18 first and second engaging means 15, 16 configured respectively to couple both first and second intermediate shaft 12, 14 with an output shaft 7, mechanically connected to the traction wheels, so that the torque acting on output shaft 7 is exactly equal to zero.

The method may further comprise the following steps:
- disengaging only one of either first or second engaging means 15, 16,
- controlling the hydrostatic unit 3, so that the hydrostatic unit provides input shaft 9 with a predetermined torque value, which is transmitted to output shaft 7 by either first gearing 11 and first intermediate shaft 12 or second gearing 13 and second intermediate shaft 14.

In view of the foregoing, the advantages of transmission 1 according to the invention are apparent.

Indeed, DCPZ condition is a high quality Power Zero condition. In fact, all possible torque variations, due to temperature, wheel load, input speed variations and similar, does not affect the Power Zero condition and wheels are kept still.

Since in this DCPZ condition, the hydrostatic unit 3 is acting as an elastic component and pressure inside hydrostatic unit 3 may increase, a preferred solution would be a closed-loop control based on hydrostatic unit pressure sensors. By this pressure control, the pressure inside the hydrostatic unit may be kept low by modulating the current actuating the hydrostatic unit itself.

Advantageously, since both disk clutches 15' and 16' are engaged, the driveline is ready to move indistinctly in Forward or Reverse direction, with negligible delay - about 100 ms - due to a clutch disengagement. Without this invention, shifting from a still condition to a move condition would instead occurs with a noticeable delay - about 800 ms - due to a clutch engagement.

It is clear that modifications can be made to the described transmission which do not extend beyond the scope of protection defined by the claims.

For sake of example, gearings 8, 11, 13 and 19 may be substituted by other typologies of gearings having the same functionalities.

Again, engaging means 15 and 16 may comprise other typologies of clutches or equivalent devices.

## Claims

1. A transmission (1) for a work vehicle, said transmission (1) comprising:
- a hydrostatic unit (3) configured to provide a torque to a first input shaft (9), said torque being provided by an internal combustion engine (2) of the work machine,
- a first gearing (11) connecting said input shaft (9) to a first intermediate shaft (12) and configured to transmit a first torque value to said first intermediate shaft (12),
- a second gearing (13) connected to said input shaft (9) and connectable to a second intermediate shaft (14), said second gearing (13) being configured to transmit to said second intermediate shaft (14) the same torque value as transmitted by first gearing (11) but in an opposite rotation direction with respect to the rotation direction of first intermediate shaft (12), wherein
- first and second intermediate shafts (12, 14) are configured to cooperate respectively with first and second engaging means (15, 16), said engaging means (15, 16) configured to couple both first intermediate shaft (12) and second intermediate shaft (14) with an output shaft (7), mechanically connected to the traction wheels,
the transmission (1) being configured such that:
- whenever the torque provided by the hydrostatic unit is near to a zero value, both first and second engaging means (15, 16) are configured to be contemporary engaged, and
- output shaft (7) is provided with a first "near zero" torque transmitted by first intermediate shaft (12) in a rotation direction and with a second "near zero" torque transmitted by second intermediate shaft (14) in the opposite rotation direction and having the same value as said first "near zero" torque, so that the torque acting on output shaft (7) is exactly equal to zero;
wherein said output shaft (7), said first intermediate shaft (12) and said second intermediate shaft (14) are coaxial to an axis (B) of said transmission (1).

2. Transmission according to claim 1, further comprising a second input shaft (10) coupled to a third gearing (19), connectable to second intermediate shaft (14), wherein third gearing (19) is configured so that the rotation direction of second intermediate shaft (14) is opposite in respect to the rotation direction of input shaft (10).

3. Transmission according to claim 2, wherein second intermediate shaft (14) is slidably connected to a synchronizer element (20), movable from a neutral position to engage either second gearing (13) or third gearing (19).

4. Transmission according to any of the preceding claims, wherein the hydrostatic unit (3) comprises a pump (4) and a hydraulic motor (5) and is configured to deliver the mechanical energy to a Power Take Off shaft (6) to drive implements.

5. Transmission according to any of the preceding claims, further comprising a planetary gear train (8) configured to transmit a torque from the hydrostatic unit (3) to at least said first input shaft (9).

6. Transmission according to any of the preceding claims, wherein first and second engaging means (15, 16) are configured to respectively couple first and second intermediate shafts (12, 14) with a rotating housing (17), said rotating housing (17) being fixedly connected to output shaft (7).

7. Transmission according to any of the preceding claims, wherein first and second engaging means (15, 16) comprise respective disk clutches (15', 16'), actuated by respective driving devices (18).

8. Transmission according to any of the preceding claims, further comprising an electronic control unit configured to control at least the hydrostatic unit (3).

9. Transmission according to claim 8 wherein the electronic control unit is configured to perform a closed-loop control based on hydrostatic unit pressure sensors.

10. Transmission according to claim 8 or 9, wherein said electronic control unit is further electrically connected to driving devices (18) and to synchronizer element (20), so as to control these latter.

11. Method for operating a transmission (1) of a work machine according to any of the preceding claims, the method comprising the following steps:
- controlling a hydrostatic unit (3) by an electronic unit controls, so that the hydrostatic unit provides an input shaft (9) with a torque value very close to a Power Zero ratio,
- transmitting by a first gearing (11) to a first intermediate shaft (12) a first "near zero" torque value,
- transmitting by a second gearing (13) to a second intermediate shaft (14), a second "near zero" torque value having opposite rotation direction and same value as said first "near zero" torque; said output shaft (7), said first intermediate shaft (12) and said second intermediate shaft (14) being coaxial to an axis (B) of said transmission (1)
- contemporary engaging by driving devices (18) first and second engaging means (15, 16) configured respectively to couple both first and second intermediate shaft (12, 14) with an output shaft (7), mechanically connected to the traction wheels, so that the torque acting on output shaft (7) is exactly equal to zero.

12. Method according to claim 11, wherein the method further comprises the following steps:
- disengaging only one of either first or second engaging means (15, 16),
- controlling the hydrostatic unit (3), so that the hydrostatic unit provides input shaft (9) with a predetermined torque value, which is transmitted to output shaft (7) by either first gearing (11) and first intermediate shaft (12) or second gearing (13) and second intermediate shaft (14).

## Patentansprüche

1. Getriebe (1) für ein Nutzfahrzeug, wobei das Getriebe (1) umfasst:
• eine hydrostatische Einheit (3), die dazu eingerichtet ist, ein Drehmoment an einer ersten Eingangswelle (9) bereitzustellen, wobei das Drehmoment von einem Verbrennungsmotor (2) des Nutzfahrzeugs bereitgestellt wird,
• ein erstes Zahnrad (11), das die Eingangswelle (9) mit einer ersten Zwischenwelle (12) verbindet und dazu eingerichtet ist, einen ersten Drehmomentbetrag auf die erste Zwischenwelle (12) zu übertragen,
• ein zweites Zahnrad (13), das mit der Eingangswelle (9) verbunden ist und mit einer zweiten Zwischenwelle (14) verbindbar ist, wobei das zweite Zahnrad (13) dazu eingerichtet ist, den gleichen Drehmomentbetrag an die zweite Zwischenwelle (14) zu übertragen, wie von dem ersten Zahnrad (11) übertragen wird, jedoch in einer entgegengesetzten Drehrichtung in Bezug auf die Drehrichtung der ersten Zwischenwelle (12), wobei
• die erste und die zweite Zwischenwelle (12, 14) dazu eingerichtet sind, mit einer ersten bzw. zweiten Eingriffseinrichtung (15, 16) zusammenzuwirken, wobei die Eingriffseinrichtungen (15, 16) dazu eingerichtet sind, sowohl die erste Zwischenwelle (12) als auch die zweite Zwischenwelle (14) mit einer Ausgangswelle (7) zu verbinden, die mechanisch mit den Antriebsrädern verbunden ist,
wobei das Getriebe (1) derart eingerichtet ist, dass:
• wenn das Drehmoment, das von der hydrostatischen Einheit bereitgestellt wird, nahe einem Nullwert ist, sowohl die erste als auch die zweite Eingriffseinrichtung (15, 16) dazu eingerichtet sind, gleichzeitig in Eingriff zu stehen und
• die Ausgangswelle (7) mit einem ersten "nahe Null"-Drehmoment versehen wird, das von der ersten Zwischenwelle (12) in einer Drehrichtung übertragen wird, und mit einem zweiten "nahe Null"-Drehmoment versehen wird, das von der zweiten Zwischenwelle (14) in der entgegengesetzten Drehrichtung übertragen wird und das den gleichen Betrag wie das erste "nahe Null"-Drehmoment aufweist, sodass das auf die Ausgangswelle (7) wirkende Drehmoment genau gleich Null ist;
wobei die Ausgangswelle (7), die erste Zwischenwelle (12) und die zweite Zwischenwelle (14) koaxial zu einer Achse (B) des Getriebes (1) sind.

2. Getriebe nach Anspruch 1, des Weiteren eine zweite Eingangswelle (10) umfassend, die mit einem dritten Zahnrad (19) verbunden ist, das mit der zweiten Zwischenwelle (14) verbindbar ist, wobei das dritte Zahnrad (19) derart eingerichtet ist, dass die Drehrichtung der zweiten Zwischenwelle (14) entgegengesetzt zu der Drehrichtung der Eingangswelle (10) ist.

3. Getriebe nach Anspruch 2, wobei die zweite Zwischenwelle (14) verschiebbar mit einem Synchronisierungselement (20) verbunden ist, das aus einer neutralen Position bewegbar ist, um entweder mit dem zweiten Zahnrad (13) oder dem dritten Zahnrad (19) in Eingriff zu stehen.

4. Getriebe nach einem der vorhergehenden Ansprüche, wobei die hydrostatische Einheit (3) eine Pumpe (4) und einen hydraulischen Motor (5) umfasst und dazu eingerichtet ist, die mechanische Energie einer Zapfwelle (6) zuzuführen, um Arbeitsgeräte anzutreiben.

5. Getriebe nach einem der vorhergehenden Ansprüche, des Weiteren ein Planetengetriebe (8) umfassend, das dazu eingerichtet ist, ein Drehmoment von der hydrostatischen Einheit (3) auf mindestens die erste Eingangswelle (9) zu übertragen.

6. Getriebe nach einem der vorhergehenden Ansprüche, wobei die erste und die zweite Eingriffseinrichtung (15, 16) dazu eingerichtet sind, die erste bzw. zweite Zwischenwelle (12, 14) mit einem rotierenden Gehäuse (17) zu verbinden, wobei das rotierende Gehäuse (17) fest mit der Ausgangswelle (7) verbunden ist.

7. Getriebe nach einem der vorhergehenden Ansprüche, wobei die erste und die zweite Eingriffseinrichtung (15, 16) jeweils eine Scheibenkupplung (15', 16') umfassen, die durch entsprechende Antriebseinrichtungen (18) betätigt werden.

8. Getriebe nach einem der vorhergehenden Ansprüche, des Weiteren eine elektronische Steuereinrichtung umfassend, die dazu eingerichtet ist, mindestens die hydrostatische Einheit (3) zu steuern.

9. Getriebe nach Anspruch 8, wobei die elektronische Steuereinrichtung dazu eingerichtet ist, eine geschlossene Regelkreissteuerung auf der Basis von Drucksensoren der hydrostatischen Einheit auszuführen.

10. Getriebe nach Anspruch 8 oder 9, wobei die elektronische Steuereinrichtung des Weiteren mit den Antriebseinrichtungen (18) und dem Synchronisierungselement (20) elektrisch verbunden ist, um diese zu steuern.

11. Verfahren zum Betreiben eines Getriebes (1) eines Nutzfahrzeugs nach einem der vorhergehenden Ansprüche, wobei das Verfahren die folgenden Schritte umfasst:
• Steuern einer hydrostatischen Einheit (3) durch eine elektronische Steuereinrichtung derart, dass die hydrostatische Einheit einer Eingangswelle (9) einen Drehmomentbetrag bereitstellt, der sehr nah an einem Null-Leistungsverhältnis liegt,
• Übertragen eines ersten "nahe Null"-Drehmomentbetrags durch ein erstes Zahnrad (11) auf eine erste Zwischenwelle (12),
• Übertragen eines zweiten "nahe Null"-Drehmomentbetrags durch ein zweites Zahnrad (13) auf eine zweite Zwischenwelle (14), das eine entgegengesetzte Drehrichtung und den gleichen Betrag aufweist, wie das erste "nahe Null"-Drehmoment; wobei die Ausgangswelle (7), die erste Zwischenwelle (12) und die zweite Zwischenwelle (14) koaxial zu einer Achse (B) des Getriebes (1) sind
• Mittels Antriebseinrichtungen (18) gleichzeitiges in Eingriff bringen einer ersten und einer zweiten Eingriffseinrichtung (15, 16), die dazu eingerichtet sind, die erste bzw. zweite Zwischenwelle (12, 14) mit einer Ausgangswelle (7) zu verbinden, die mit den Antriebsrädern mechanisch verbunden ist, sodass das Drehmoment, das auf die Ausgangswelle (7) wirkt, genau gleich Null ist.

12. Verfahren nach Anspruch 11, wobei das Verfahren des Weiteren die folgenden Schritte aufweist:
• Auskuppeln von nur einer der ersten und zweiten Eingriffseinrichtungen (15, 16),
• Steuern der hydrostatischen Einheit (3) derart, dass die hydrostatische Einheit der Eingangswelle (9) einen vorbestimmten Drehmomentbetrag bereitstellt, der entweder durch das erste Zahnrad (11) und die erste Zwischenwelle (12) oder durch das zweite Zahnrad (13) und die zweite Zwischenwelle (14) auf die Ausgangswelle (7) übertragen wird.

## Revendications

1. Une transmission (1) pour un véhicule de chantier, ladite transmission (1) comprenant :
- une unité hydrostatique (3) configurée pour fournir un couple à un premier arbre d'entrée (9), ledit couple étant fourni par un moteur à combustion interne (2) de l'engin de chantier,
- un premier engrenage (11) reliant ledit arbre d'entrée (9) à un premier arbre intermédiaire (12) et configuré pour transmettre une première valeur de couple audit premier arbre intermédiaire (12),
- un deuxième engrenage (13) relié audit arbre d'entrée (9) et pouvant être connecté à un second arbre intermédiaire (14), ledit deuxième engrenage (13) étant configuré pour transmettre audit second arbre intermédiaire (14) la même valeur de couple que celle transmise par le premier engrenage (11), mais dans un sens de rotation opposé par rapport au sens de rotation du premier arbre intermédiaire (12), dans lequel
- le premier et le second arbre intermédiaires (12, 14) sont configurés pour coopérer respectivement avec le premier et le second moyen d'engagement (15, 16), lesdits moyens d'engagement (15, 16) étant configurés pour coupler à la fois le premier arbre intermédiaire (12) et le second arbre intermédiaire (14) avec un arbre de sortie (7), relié mécaniquement aux roues de traction,
la transmission (1) étant configurée de telle sorte que :
- chaque fois que le couple fourni par l'unité hydrostatique est proche d'une valeur nulle, le premier et le second moyen d'engagement (15, 16) sont configurés pour être simultanément engagés, et
- l'arbre de sortie (7) est doté d'un premier couple « proche de zéro » transmis par le premier arbre intermédiaire (12) dans un sens de rotation et d'un second couple « proche de zéro » transmis par le second arbre intermédiaire (14) dans le sens de rotation opposé et ayant la même valeur que ledit premier couple « proche de zéro », de sorte que le couple agissant sur l'arbre de sortie (7) est exactement égal à zéro ;
dans lequel ledit arbre de sortie (7), ledit premier arbre intermédiaire (12) et ledit second arbre intermédiaire (14) sont coaxiaux à un axe (B) de ladite transmission (1).

2. Transmission selon la Revendication 1, comprenant en outre un second arbre d'entrée (10) couplé à un troisième engrenage (19), pouvant être connecté au second arbre intermédiaire (14), dans lequel le troisième engrenage (19) est configuré de telle sorte que le sens de rotation du second arbre intermédiaire (14) est opposé par rapport au sens de rotation de l'arbre d'entrée (10).

3. Transmission selon la Revendication 2, dans laquelle le second arbre intermédiaire (14) est relié de manière coulissante à un élément de synchronisation (20), mobile depuis une position neutre pour engager soit le deuxième engrenage (13), soit le troisième engrenage (19).

4. Transmission selon l'une quelconque des revendications précédentes, dans laquelle l'unité hydrostatique (3) comprend une pompe (4) et un moteur hydraulique (5) et est configuré pour fournir l'énergie mécanique à un arbre de prise de force (6) afin d'entraîner des éléments.

5. Transmission selon l'une quelconque des revendications précédentes, comprenant en outre un train planétaire (8) configuré pour transmettre un couple de l'unité hydrostatique (3) à au moins ledit premier arbre d'entrée (9).

6. Transmission selon l'une quelconque des revendications précédentes, dans laquelle le premier moyen d'engagement et le second moyen d'engagement (15, 16) sont configurés pour coupler respectivement le premier et le second arbre intermédiaire (12, 14) avec un boîtier rotatif (17), ledit boîtier rotatif (17) étant raccordé de manière fixe à l'arbre de sortie (7).

7. Transmission selon l'une quelconque des revendications précédentes, dans laquelle le premier moyen d'engagement et le second moyen d'engagement (15, 16) comprennent des embrayages à disques respectifs (15', 16'), actionnés par des dispositifs d'entraînement respectifs (18).

8. Transmission selon l'une quelconque des revendications précédentes, comprenant en outre une unité de commande électronique configurée pour contrôler au moins l'unité hydrostatique (3).

9. Transmission selon la Revendication 8, dans laquelle l'unité de commande électronique est configurée pour effectuer une commande en boucle fermée basée sur des capteurs de pression de l'unité hydrostatique.

10. Transmission selon la Revendication 8 ou 9, dans laquelle ladite unité de commande électronique est en outre connectée électriquement à des dispositifs d'entraînement (18) et à un élément de synchronisation (20), de manière à contrôler ces derniers.

11. Procédé pour faire fonctionner une transmission (1) d'un engin de chantier selon l'une quelconque des revendications précédentes, le procédé comprenant les étapes suivantes :
- contrôler une unité hydrostatique (3) par une unité de commande électronique, de manière à ce que l'unité hydrostatique fournisse à un arbre d'entrée (9) une valeur de couple très proche d'une puissance nulle,
- transmettre par un premier engrenage (11) à un premier arbre intermédiaire (12) une première valeur de couple « proche de zéro »,
- transmettre par un deuxième engrenage (13) à un second arbre intermédiaire (14), une seconde valeur de couple « proche de zéro » ayant un sens de rotation opposé et la même valeur que ledit premier couple « proche de zéro » ; ledit arbre de sortie (7), ledit premier arbre intermédiaire (12) et ledit second arbre intermédiaire (14) étant coaxiaux à un axe (B) de ladite transmission (1)
- engager simultanément par des dispositifs d'entraînement (18) d'un premier et d'un deuxième moyen d'engagement (15, 16) configurés respectivement pour coupler à la fois le premier et le second arbre intermédiaire (12, 14) avec un arbre de sortie (7), raccordé mécaniquement aux roues de traction, de sorte que le couple agissant sur l'arbre de sortie (7) est exactement égal à zéro.

12. Procédé selon la Revendication 11, dans lequel le procédé comprend en outre les étapes suivantes :
- désengager seulement l'un des premier ou deuxième moyens d'engagement (15, 16),
- commander l'unité hydrostatique (3), de sorte que l'unité hydrostatique fournisse à l'arbre d'entrée (9) une valeur de couple prédéterminée, qui est transmise à l'arbre de sortie (7) soit par le premier engrenage (11) et le premier arbre intermédiaire (12), soit par le deuxième engrenage (13) et le deuxième arbre intermédiaire (14).
